# EUROPEAN PATENT SPECIFICATION

(11) **EP 3 502 491 B1**
(45) Date of publication and mention of the grant of the patent: **14.10.2020**
(21) Application number: 18212341.4
(22) Date of filing: 13.12.2018
(51) Int. Cl.: F16B 12/20, F16B 13/06

(54) **CONNECTION DEVICE**
VERBINDUNGSEINRICHTUNG
DISPOSITIF DE CONNEXION

(30) Priority: 21.12.2017 IT 201700148227
(43) Date of publication of application: 26.06.2019
(73) Proprietor: CAR S.r.l., 35127 Padova (IT)
(72) Inventor: ROVOLETTO, Stefano, 35127 Padova (IT)
(74) Representative: Zermani, Umberto

(56) References cited:
- AU-A1- 2016 275 349
- DE-A1-102009 043 179
- DE-U1-202015 105 030

## Description

The present invention relates to a connecting device between components of a piece of furniture, preferably used to connect two mutually angled components to each other.

In the furniture production industry, and more generally of elements of furniture, the use of connecting devices to connect the different components of furniture and tighten them, in particular via panels used as shelves or walls, in order to assemble the piece of furniture and/or to fix it in a room in the desired position, is known.

In particular, the known connecting devices are those comprising a pin-shaped tie-rod, fixed to its first end to a first component of the piece of furniture, and an eccentric element, generally of cylindrical shape, which is inserted in a seat formed in a first component of the piece of furniture to engage a tie-rod head protruding from the first component. The eccentric element is provided with hooking means of the tie-rod head, so that, as a consequence of the rotation of the eccentric element around its own axis, the tie-rod is moved inside the first junction element, obtaining in this way the approaching and the clamping of the two components of the piece of furniture.

This type of connecting device finds a preferred application in the union of a horizontal panel (shelf) with a vertical wall.

In one embodiment of the connecting device of the type indicated above, it is provided that the fastening of the tie-rod in the seat of the first component of the piece of furniture is obtained by a coupling of the plug type.

In this case, the end of the tie-rod opposite to the head engaged in the eccentric element has an enlarged section segment, typically with tapered profile, and the tie-rod is slidingly accommodated inside a casing provided with a corresponding radially expandable end, so that the axial displacement of the tie-rod caused by the rotation of the eccentric element determines the radial expansion of such end and its engagement in the seat of the component of the piece of furniture in which it is accommodated.

In some new generation embodiments, on the other hand, the connecting devices are defined by a single casing inside which both the tie-rod and the eccentric element (or other actuator means) are housed.

Such casing is generally provided with two expandable, axially spaced portions, each one suitable to engage in the seat of a respective component of the piece of furniture.

Both the connecting devices of the type described above, however, have some drawbacks.

In fact, such devices usually have axial sealing limits (i.e. slipping strength) which prevent their use in certain applications, wherein, for example, one of the components of the piece of furniture is a shelf suspended and held only by the joint. In this regard, it should be noted, in fact, that the expandable portions designed for this application are traditionally made by coupling a wedge-shaped portion of the tie-rod and a tab having an end pivoted to the casing and an end free to rotate in "opening" following a translation of the wedge-shaped portion. Examples of other prior art solutions are known from document DE102009043179.

Such configuration, while functional, results in that, regardless of the length of the tab and of the wedge-shaped portion, the only actually gripping portions of the tab in the seat of the piece of furniture are the end ones.

This entails not only a reduced sealing of the joint, but also implies that in the rotation of the eccentric element it is necessary to apply a torque which is not always easy for the fitter (not necessarily a professional). Another type of connecting device is known from AU 2016 275 349 A1.

The aim of the present invention is therefore to provide a connecting device between components of a piece of furniture able to overcome the drawbacks related to the above-mentioned known art.

In particular, it is an object of the present invention to provide a connecting device between components of a piece of furniture having an increased sealing and a steady positioning.

Said objects are achieved by a connecting device between components of a piece of furniture having the characteristics of one or more of the subsequent claims and, in particular, comprising an elongated body extending along its own longitudinal axis between a first portion, capable of being accommodated in a first seat formed in a first component of said piece of furniture, and a second portion, capable of being accommodated in a second seat formed in a second component of said piece of furniture.

The elongated body comprises a first and a second expandable sector associated to the first and the second portion, respectively, and movable between a radially contracted condition and a radially expanded condition.

In this regard, actuation means comprising at least one expanding body slidably housed in said elongated body and provided with at least one first and one second enlarged portion associated to the first and the second expandable sector, respectively, are provided.

The expanding body being selectively movable between a first position, wherein it maintains the first and the second expandable sector in said radially contracted condition, and a second position, wherein the first and the second enlarged portion bring the first and the second expandable sector in said radially expanded condition.

According to the invention, the first enlarged portion of the expanding body comprises multiple radial shoulders spaced apart along the longitudinal axis so as to define an alternation of apices and grooves, wherein in said radially expanded condition each radial shoulder is engaged, in radial thrust, with the first expandable sector so as to carry out a prolonged expansion of the first sector extending at least at said radial shoulders, and said first expandable sector comprises multiple segments expandable between each other which are angularly spaced apart around said longitudinal axis and each of them developing along the longitudinal axis, between two end portions each bound to the elongated body so that a central portion of said segments expands between said end portions.

Preferably, said radial shoulders have substantially equivalent radial extension.

Advantageously, in such way each radial shoulder defines a radial thrust point on the respective expandable portion of the elongated body, allowing a greater distribution of the stress and, therefore, a high slipping strength.

Advantageously, in this way the "wing" effect is avoided, by distributing in a more homogeneous way the "gripping" portions of the first elongated body expandable sector.

It should be noted that, preferably, the first expandable sector is located on the same portion of the elongated body wherein an actuator element of the actuation means is located, which is accessible to an operator.

Preferably, moreover, the first expandable sector comprises a radially outer surface and a radially inner surface, slidably associated to the first enlarged portion of the expanding body and having a succession of radial projections spaced apart along the longitudinal axis.

More precisely, the radial projections are positioned so that:
- in the first position of the expanding body and with reference to the longitudinal axis, the radial shoulders of the expanding body are alternated with the radial projections of the first expandable sector;
- in the second position of the expanding body and with reference to the longitudinal axis, each radial shoulder of the expanding body is located at a respective radial projection of the first expandable sector and connected to it by radial thrust to expand said first expandable sector.

Advantageously, in this way each radial shoulder has a corresponding radial projection which maximizes the radial thrust action of the elongated body on the walls of the seat of the respective component.

Moreover, such configuration allows, simultaneously with the above-mentioned maximization, to distribute the clamping stress and to make it gradual for the operator.

These and other features with the related technical advantages will become more apparent from the following exemplary, therefore nonlimiting, description of a preferred, therefore not exclusive, embodiment of a connecting device between components of a piece of furniture as shown in the following figures, wherein:

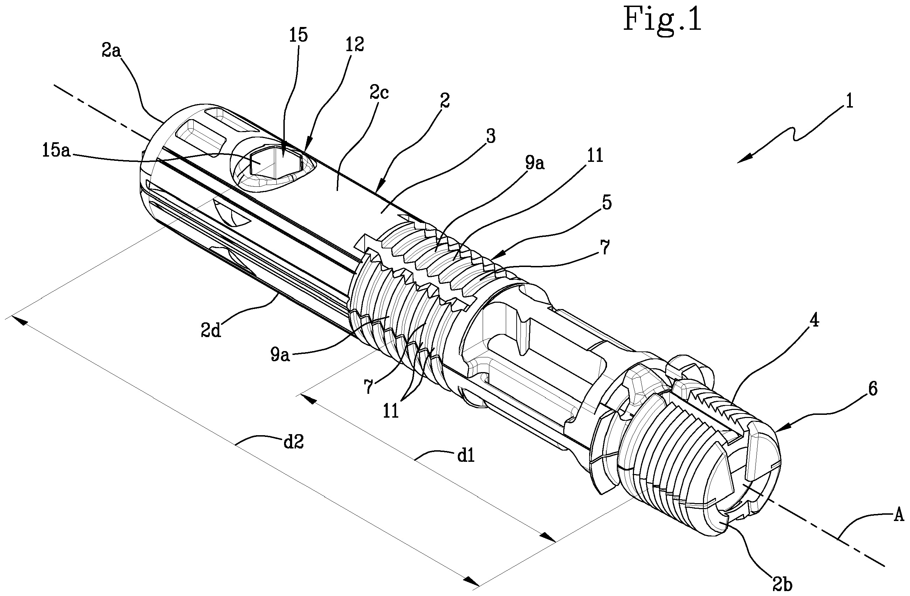

- Figure 1 shows a perspective view of a connecting device between components of a piece of furniture according to the present invention;

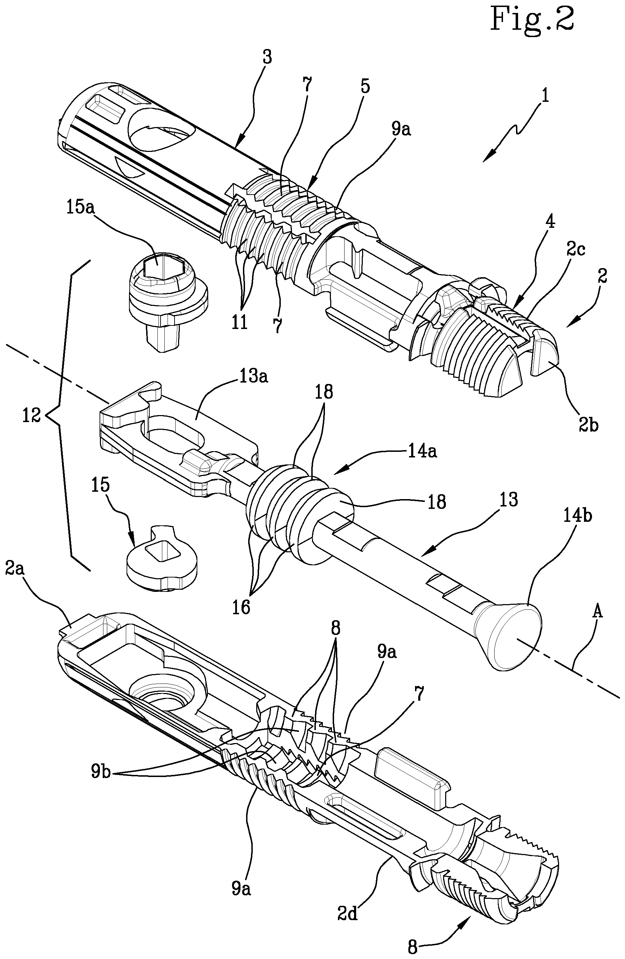

- Figure 2 shows an exploded view of the connecting device of Figure 1;

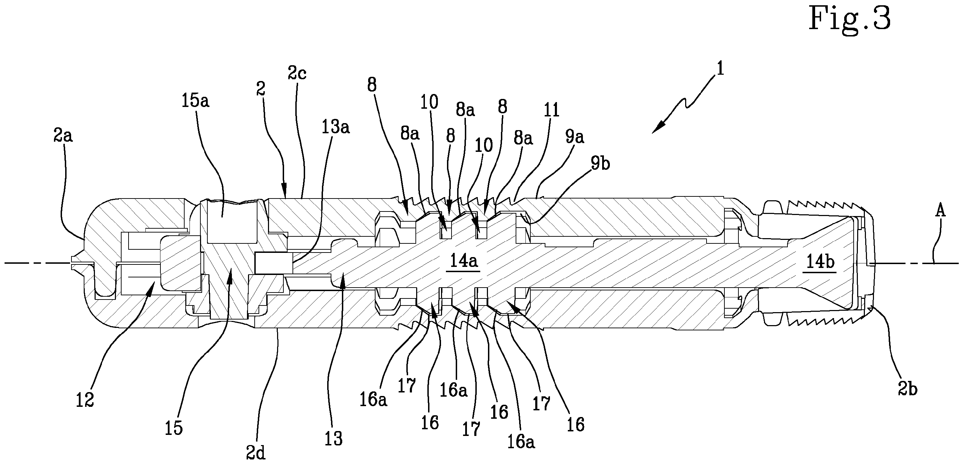

- Figure 3 shows a longitudinal sectional view of the connecting devices of Figure 1;
- Figures 4 and 5 show a detail of Figure 3 in two different operating conditions.

With reference to the appended Figures, number 1 indicates a connecting device between components of a piece of furniture according to the present invention.

The connecting device 1 is arranged to mutually connect and clamp a first and a second component of a piece of furniture, which can be generally considered as a first panel and a second panel, oriented in a perpendicular way to each other.

The panels are preferably made of wood-based material and have a thickness of between 12 mm and 30 mm, according to the most common construction standards in the furniture industry and in the home decor industry in general.

It is understood that the first and the second components of the piece of furniture can be made with different materials or shapes and can be positioned for the mutual coupling according to any other appropriate arrangement.

The connecting device 1 comprises an elongated body 2 extending along its own longitudinal axis "A" between a first end 2a and a second end 2b.

In the preferred embodiment, the elongated body 2 comprises a first 2c and a second half-shell 2d mutually abutted at a junction edge.

More precisely, the elongated body 2 comprises a first portion 3 capable of being accommodated in a first seat obtained in a first component of the piece of furniture, and a second portion 4, capable of being accommodated in a second seat obtained in a second component of said piece of the furniture.

The first portion 3 ends with the first end 2a of the elongated body 2.

The second portion 4 ends with the second end 2b of the elongated body 2.

It should be noted that "seat formed in a first component of the piece of furniture" refers herein to a hole/reaming/milling made in a component of a piece of furniture, whether it is a door, an upright, or other, wherein a portion of the elongated body can be slidingly inserted along the longitudinal axis "A".

The elongated body 2 comprises a first 5 and a second expandable sector 6 respectively associated with the first 3 and the second portion 4.

Therefore, the first portion 3 of the elongated body 2 comprises the first expandable sector 5.

The second portion 4 of the elongated body 2 comprises the second expandable sector 6.

The first 5 and the second expandable sector 6 are therefore placed at a first reciprocal distance "d1"; said distance being detected along the longitudinal axis "A".

The expandable sectors 5, 6 can be moved between a radially contracted condition and a radially expanded condition.

It should be noted that the terms "radial" and "radially" are herein used with reference to the longitudinal axis "A".

Therefore, the radial directions and displacements are evaluated to be those moving away from and/or approaching said longitudinal axis "A", transversely to it.

When the expandable sectors 5, 6 are in the radially contracted condition, therefore, the elongated body 2 can be inserted in and extracted from the seat of the component of the piece of furniture.

On the contrary, when the expandable sectors 5, 6 are in the radially expanded condition (and the elongated body 2 is housed in the seats), the elongated body 2 is anchored inside the seats without the possibility of sliding.

In order to move the expandable sectors 5, 6, the connecting device 1 comprises actuation means 12 associated with the elongated body 2 and selectively movable between a first position, wherein they maintain the expandable sectors 5, 6 in said radially contracted condition, and a second position, wherein they maintain the expandable sectors 5, 6 in the radially expanded condition.

Preferably, the actuation means 12 comprise an expanding body 13 slidably housed in the elongated body 2 and provided with a plurality of enlarged portions each associated to an expandable sector.

More precisely, the expanding body 13 is movable in the elongated body 2 along the longitudinal axis "A" between a rest position, wherein the enlarged portions do not act on the expandable sectors 5, 6, and an active position wherein the enlarged portions radially press on the expandable sectors 5, 6 bringing them in the radially expanded condition.

In the preferred embodiment, therefore, the expanding body 13 comprises at least a first 14a and a second enlarged portion 14b respectively associated with the first 5 and the second expandable sector 6.

Thus, the first enlarged portion 14a is slidably associated with the first expandable sector 5.

The second enlarged portion is slidably associated with the second expandable sector 6.

To move the expanding body 13, preferably the actuation means 12 comprise at least one actuator element 15.

The expanding body 13 therefore comprises a portion 13a which can be coupled with said actuator element 15.

This actuator element 15 is selectively switchable between a first configuration, wherein the expandable sectors 5, 6 are in said radially contracted condition, and a second configuration, wherein the expandable sectors 5, 6 are in said radially expanded condition.

Preferably, the actuator element 15 is an eccentric grub screw coupled with said expanding body by a cam profile.

Alternatively, in embodiments not shown, the actuation means could be of another nature and comprise, e.g., a pair of mutually movable elements each comprising an expandable portion and an expanding element complementary to those of the other movable element.

Such actuator element 15 is preferably housed in the elongated body 2 and externally accessible by an operator.

More precisely, the elongated body 2 has at least one opening 7 from which an interface portion 15a of the actuator element 15 is accessible.

The interface portion 15a is preferably defined by a recess or notch suitably shaped to accommodate a tool, such as a screwdriver or an Allen wrench.

Preferably, the actuator element 15 is housed in the first portion 3 of the elongated body 2.

Moreover, with reference, for example, to the illustrated embodiment, the actuator element 15 is placed at a second distance "d2", measured along said longitudinal axis "A", from the second expandable sector 6.

Preferably, such second distance "d2" is greater than said first distance "d1".

In other words, the actuator element 15 is placed distally from the second expandable sector 6 with respect to the first expandable sector 5.

Thus, the coupling portion 13a of the expanding body 13 is placed distally from the second enlarged portion 14b with respect to the first enlarged portion 14a.

According to the present invention, the first enlarged portion 14a of the expanding body 13 comprises a plurality of radial shoulders 16 spaced apart along the longitudinal axis "A" so as to define an alternation of apices and grooves.

It should be noted that, preferably, the plurality of radial shoulders 16 is structurally compact along the longitudinal axis "A", defining, from the functional point of view, a single enlarged portion (first 14a).

In other words, the axial distance (i.e. along the longitudinal axis "A") between each radial shoulder 16 and the adjacent one is preferably negligible with respect to the total length of the expanding body 13, more preferably less than 1.5 mm, even more preferably less than 1 mm.

The expression "alternation of apices and grooves", with reference to the longitudinal axis "A", refers to, e.g., the peripheral profile of the first serrated enlarged portion 14a.

In said radially expanded condition, each radial shoulder 16 is engaged, in radial thrust, with the first expandable sector 5 so as to realise a prolonged expansion of the first sector extending at least at said radial shoulders 16.

Preferably, the radial shoulders 16 have substantially a radial extension equal to each other.

In other words, the distance between the peripheral edge of the shoulder and the longitudinal axis "A" is substantially equivalent (except for small deviations) between all the radial shoulders 16.

Preferably, the radial shoulders 16 have a wedge-shaped conformation. More precisely, each shoulder 16 is provided with a sliding surface 16a inclined with respect to the longitudinal axis "A".

In particular, the sliding surface 16a is inclined with respect to the longitudinal axis "A" of an acute angle, with reference to the movement direction.

In this way, a translation of the expanding body 13 along said longitudinal axis "A" corresponds to a radial thrust action of the radial shoulder 16 on the first expandable sector 13.

Therefore, thanks to the expanding body according to the present invention, the first enlarged portion 14a exerts a plurality of precise thrust actions distributed along the longitudinal axis "A" on the first expandable sector 5.

Preferably, furthermore, each radial shoulder 16 extends away from the longitudinal axis "A" between a radially inner edge 16b and a radially outer edge 16c (or peripheral edge).

Such peripheral edge is defined by a thrust surface 17 parallel to said longitudinal axis "A".

The thrust surface 17 preferably has a longitudinal extension of at least 0.5 mm.

Advantageously, in this way the thrust action exerted on the first expandable sector 5 is stable.

In the illustrated embodiment, the radial shoulders 16 are each defined by a respective disc (or annular) shaped shoulder 18 extending around the longitudinal axis.

Preferably, the shoulder has a first (front) inclined face, to define the wedge-shaped structure of the radial shoulder 16, and a second (rear) face substantially orthogonal to the longitudinal axis "A", to facilitate the approach between the shoulders 16 and make the first enlarged portion 14a compact.

It should be noted that the relative terms "front" and "rear" are used herein with reference to the movement direction of the expanding body during clamping (or expansion).

In order to maximize the effect of stress and deformation distribution, preferably the first expandable sector 5 of the elongated body 2 comprises multiple segments 7 which can be spaced angularly apart from each other around said longitudinal axis "A".

Each one of such segments 7 extends along the longitudinal axis "A" between two end portions 7a each bound to the elongated body 2.

In other words, unlike the common tabs which have a free end to "open", the segments 7 are bound to both ends and, during expansion, they centrally inflate.

In other words, as the expanding body 13 is in the second position, it expands a central portion 7b of the segments 7 arranged between said end portions 7a.

Preferably, the first expandable sector 5, in particular each segment 7, comprises a radially outer surface 9a and a radially inner surface 9b, slidably associated with the first enlarged portion 14a of the expanding body 13.

According to a further aspect of the present invention, the radially inner surface 9b of the expandable sector 5 (or of the segments 7) has a succession of radial projections 8 spaced apart along the longitudinal axis "A".

With the expression radial projections 8 it is meant that projections are radially internal (i.e. directed towards the longitudinal axis "A").

Preferably, given the presence of several angularly spaced segments 7, each radial projection 8 extends circumferentially around the longitudinal axis "A" in a discontinuous manner, divided into a plurality of discrete angularly spaced elements, each part of a segment 7.

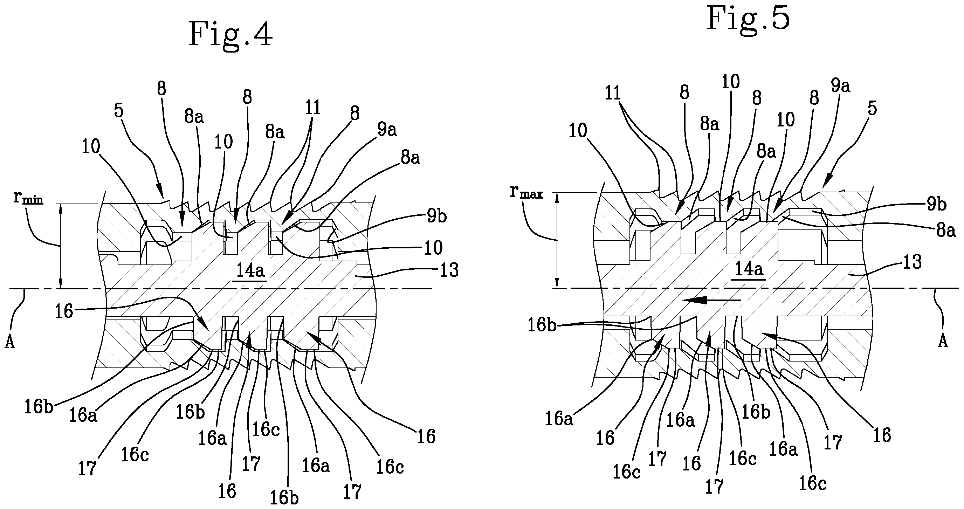

In particular, such radial projections 8 are positioned so that:
in the first position (Fig. 4) of the expanding body 13 and with reference to the longitudinal axis "A", the radial shoulders 16 of the expanding body 13 are alternated with the radial projections 8 of the first expandable sector 5, and
in the second position (Fig. 5) of the expanding body 13 and with reference to the longitudinal axis "A", each radial shoulder 16 of the expanding body 13 is arranged at (i.e. aligned to) a respective radial projection 8 of the first expandable sector 5. More precisely, in said second position, each radial shoulder 16 is abutted in radial thrust on the corresponding radial projection 8 to expand said first expandable sector 5.

Preferably, therefore, each radial projection 8 corresponds to a radial shoulder 16.

In the preferred embodiment, the device 1 comprises at least three radial shoulders 16 to which at least three radial projections 8 are associated.

It should therefore be noted that, in the first position, each radial shoulder 16 is interposed between and at least partly facing two radial projections 8 (or vice versa), defining a first radial overall dimensions "rmin".

On the contrary, in the second position each radial shoulder 16 is aligned with the corresponding radial projection 8 (along the radial direction), defining a second radial overall dimensions "rₘₐₓ" greater than the first one.

In order to facilitate the movement and reduce the torque required by the operator, the sliding surface 16a of each radial shoulder 16 is slidably associated with a corresponding sliding surface 8a of the related radial projection 8.

Also the sliding surface 8a of the radial projections 8a is inclined with respect to the longitudinal axis "A" in order to facilitate the sliding.

More precisely, the sliding surface 8a of the radial projections 8a has an inclination corresponding to that of the related radial shoulder 16.

Preferably, moreover, each radial projection 8 extends towards said longitudinal axis "A" between a radially outer edge and a radially inner edge 8b.

The radially inner edge 8b is defined by an abutment surface 10 parallel to said longitudinal axis "A".

In the second position of the expanding body 13, the thrust surface 17 of each radial shoulder 16 abuts on the corresponding abutment surface 10 of the related radial projection 8 to exert the expansion thrust.

Preferably, moreover, the radially outer surface 9a of the first expandable sector 5 is provided with a plurality of gripping teeth 11 shaped to anchor the elongated body 2 to the first component of said piece of furniture.

It should also be noted that, in an embodiment, not shown, also the second enlarged portion and the second expandable sector are made similarly to the first enlarged portion and to the first expandable sector, i.e., with a plurality of radial shoulders to which a plurality of radial projections are associated.

The invention achieves the intended purposes and achieves important advantages. In fact, the presence of an enlarged portion and a corresponding distributed expandable sector allows to maximize the seal of the device, preventing it, in fact, from slipping off the seat.

## Claims

1. Connecting device between components of a piece of furniture, including:
- an elongated body (2) extending along its own longitudinal axis (A) between a first portion (3) capable of being accommodated in a first seat obtained in a first component of said piece of furniture, and a second portion (4), capable of being accommodated in a second seat obtained in a second component of said piece of furniture; said elongated body (2) comprising a first (5) and a second expandable sector (6) associated to the first (3) and the second portion (4), respectively, and movable between a radially contracted condition and a radially expanded condition;
- actuation means (12) comprising at least one expanding body (13) slidably housed in said elongated body (2) and provided with at least one first (14a) and one second enlarged portion (14b) associated to the first (5) and the second expandable sector (6), respectively; said expanding body (13) being selectively movable between a first position, wherein it maintains the first (5) and the second expandable sector (6) in said radially contracted condition, and a second position, wherein the first (14a) and the second enlarged portion (14b) bring the first (5) and the second expandable sector (6) in said radially expanded condition;
wherein said first enlarged portion (14a) of the expanding body (13) comprises multiple radial shoulders (16) spaced apart along the longitudinal axis (A) so as to define an alternated sequence of apices and grooves, wherein in said radially expanded condition each radial shoulder (16) is engaged, in radial thrust, with the first expandable sector (5) so as to carry out a prolonged expansion of the first sector extending at least at said radial shoulders,
**characterized in that** said first expandable sector (5) comprises multiple segments (7) expandable between each other which are angularly spaced apart around said longitudinal axis (A) and each of them developing along the longitudinal axis (A), between two end portions (7a) each bound to the elongated body (2) so that a central portion (7b) of said segments expands between said end portions (7a).

2. Connecting device according to claim 1, **characterized in that** the actuation means (12) comprise an actuator element (15) accessible to an operator and associated to the expanding body (13) to move it between the first position and the second position; said actuator element (15) being housed in the first portion (3) of the elongated body (2).

3. Connecting device according to claim 1 or 2, **characterized in that** the first expandable sector (5) comprises a radially outer surface (9a) and a radially inner surface (9b), slidably associated to the first enlarged portion (14a) of the expanding body (13) and having a succession of radial projections (8) spaced apart along the longitudinal axis (A) and positioned in such a way that:
- in the first position of the expanding body (13) and with reference to the longitudinal axis (A), the radial shoulders (16) of the expanding body (13) are alternated with the radial projections (8) of the first expandable sector (5);
- in the second position of the expanding body (13) and with reference to the longitudinal axis (A), each radial shoulder (16) of the expanding body (13) is located at a respective radial projection (8) of the first expandable sector (5) and connected to it by radial thrust to expand said first expandable sector (5).

4. Connecting device according to any of the previous claims, **characterized in that** said radial shoulders (16) have a wedge-shaped conformation provided with a sliding surface (17) inclined with respect to the longitudinal axis (A) in such a way that to a translation of the expanding body (13) along said longitudinal axis (A) corresponds to a radial thrust action of the radial shoulder (16) on the first expandable sector (5).

5. Connecting device according to claim 4, **characterized in that** the sliding surface (16a) of each radial shoulder (16) is slidably associated to a corresponding sliding surface (8a) of the relative radial projection (8), which is also inclined with respect to the longitudinal axis (A) in order to facilitate the sliding.

6. Connecting device according to any of the previous claims, **characterized in that** each of said radial shoulders (16) develops moving away from said longitudinal axis (A) between a radially inner edge (16b) and a radially outer edge (16c), wherein said radially outer edge (16c) is defined by a thrust surface (17) parallel to said longitudinal axis (A).

7. Connecting device according to any of the previous claims, **characterized in that** each of said radial projections (8) develops moving closer to said longitudinal axis (A) between a radially outer edge and a radially inner edge (8b), wherein said radially inner edge (8b) is defined by a thrust surface (10) parallel to said longitudinal axis (A) to which, in said second position of the expanding body, the thrust surface (17) of the respective radial shoulder is connected (16).

8. Connecting device according to any of the previous claims, **characterized in that** said radial shoulders (16) are each defined by a respective disc shaped shoulder (18) extending around the longitudinal axis.

9. Connecting device according to claims 3, **characterized in that** each expandable segment (7) has a radially internal surface (9b) provided with said succession of radial projections (8).

10. Connecting device according to any of the previous claims, **characterized in that** the first expandable sector (5) has a radially outer surface (9a) provided with a plurality of gripping teeth (11) shaped to anchor the elongated body (2) to the first component of said piece of furniture.

## Patentansprüche

1. Verbindungseinrichtung zwischen Komponenten eines Möbelstücks, umfassend:
- einen länglichen Korpus (2), der sich entlang seiner eigenen Längsachse (A) zwischen einem ersten Abschnitt (3) erstreckt, der in der Lage ist, in einem ersten Sitz untergebracht zu werden, der in einer ersten Komponente des Möbelstücks ausgebildet ist, und einem zweiten Abschnitt (4), der in der Lage ist, in einem zweiten Sitz untergebracht zu werden, der in einer zweiten Komponente des Möbelstücks ausgebildet ist, wobei der längliche Korpus (2) einen ersten (5) und einen zweiten dehnbaren Sektor (6) aufweist, assoziiert jeweils mit dem ersten (3) bzw. dem zweiten Abschnitt (4) und bewegbar zwischen einem radial zusammengezogenen Zustand und einem radial gedehnten Zustand;
- Betätigungsmittel (12), umfassend mindestens einen Dehnkorpus (13), der verschiebbar im länglichen Korpus (2) untergebracht und mit mindestens einem ersten (14a) und einem zweiten verbreiterten Abschnitt (14b) versehen ist, assoziiert jeweils mit dem ersten (5) bzw. dem zweiten dehnbaren Sektor (6), wobei der Dehnkorpus (13) selektiv zwischen einer ersten Position, in der er den ersten (5) und den zweiten dehnbaren Sektor (6) im radial zusammengezogenen Zustand hält, und einer zweiten Position, in der der erste (14a) und der zweite verbreiterte Abschnitt (14b) den ersten (5) und den zweiten dehnbaren Sektor (6) in den radial gedehnten Zustand bringen,
wobei der erste verbreiterte Abschnitt (14a) des Dehnkorpus (13) mehrere radiale Schultern (16) umfasst, die entlang der Längsachse (A) beabstandet sind, sodass eine abwechselnde Abfolge von Spitzen und Nuten definiert wird, wobei im radial gedehnten Zustand eine jede radiale Schulter (16) in Radialdruck mit dem ersten dehnbaren Sektor (5) im Eingriff ist, sodass eine verlängerte Dehnung des ersten Sektors durchgeführt wird, sich erstreckend mindestens an den radialen Schultern,
**dadurch gekennzeichnet, dass** der erste dehnbare Sektor (5) mehrere Segmente (7) umfasst, die untereinander dehnbar sind, die winkelig rund um die Längsachse (A) beabstandet sind, und von denen ein jeder sich entlang der Längsachse (A) zwischen zwei Endabschnitten (7a) entwickelt, ein jeder mit dem länglichen Korpus (2) verbunden, sodass sich ein mittiger Abschnitt (7b) der Segmente zwischen den Endabschnitten (7a) dehnt.

2. Verbindungseinrichtung nach Anspruch 1, **dadurch gekennzeichnet, dass** die Betätigungsmittel (12) ein Antriebselement (15) umfassen, das für einen Bediener zugänglich und mit dem Dehnkorpus (13) verbunden ist, um diesen zwischen der ersten Position und der zweiten Position zu bewegen, wobei das Antriebselement (15) im ersten Abschnitt (3) des länglichen Korpus (2) untergebracht ist.

3. Verbindungseinrichtung nach Anspruch 1 oder 2, **dadurch gekennzeichnet, dass** der erste dehnbare Sektor (5) eine radial äußere Oberfläche (9a) und eine radial innere Oberfläche (9b) umfasst, verschiebbar assoziiert mit dem ersten verbreiterten Abschnitt (14a) des Dehnkorpus (13) und aufweisend eine Abfolge von radialen Vorsprüngen (8), die entlang der Längsachse (A) beabstandet und so positioniert sind, dass
- die radialen Schultern (16) des Dehnkorpus (13) in der ersten Position des Dehnkorpus (13) und unter Bezugnahme auf die Längsachse (A) mit den radialen Vorsprüngen (8) des ersten dehnbaren Sektors (5) abgewechselt sind;
- eine jede radiale Schulter (16) des Dehnkorpus (13) in der zweiten Position des Dehnkorpus (13) und unter Bezugnahme auf die Längsachse (A) an einem jeweiligen radialen Vorsprung (8) des ersten dehnbaren Sektors (5) angeordnet und mit diesem durch Radialdruck verbunden ist, um den ersten dehnbaren Sektor (5) zu dehnen.

4. Verbindungseinrichtung nach einem der vorhergehenden Ansprüche, **dadurch gekennzeichnet, dass** die radialen Schultern (16) eine keilförmige Beschaffenheit aufweisen, versehen mit einer Gleitoberfläche (17), die zur Längsachse (A) geneigt ist, sodass eine Verschiebung des Dehnkorpus (13) entlang der Längsachse (A) einer Radialdruckwirkung der radialen Schulter (16) auf den ersten dehnbaren Sektor (5) entspricht.

5. Verbindungseinrichtung nach Anspruch 4, **dadurch gekennzeichnet, dass** die Gleitoberfläche (16a) einer jeden radialen Schulter (16) verschiebbar mit einer entsprechenden Gleitoberfläche (8a) des relativen radialen Vorsprungs (8) assoziiert ist, der auch zur Längsachse (A) geneigt ist, um das Gleiten zu erleichtern.

6. Verbindungseinrichtung nach einem der vorhergehenden Ansprüche, **dadurch gekennzeichnet, dass** eine jede der radialen Schultern (16) sich wegführend bewegend von der Längsachse (A) zwischen einer radial inneren Kante (16b) und einer radial äußeren Kante (16c) entwickelt, wobei die radial äußere Kante (16c) durch eine Druckoberfläche (17) definiert ist, die parallel zur Längsachse (A) angeordnet ist.

7. Verbindungseinrichtung nach einem der vorhergehenden Ansprüche, **dadurch gekennzeichnet, dass** sich ein jeder der radialen Vorsprünge (8) näher hinführend zur Längsachse (A) zwischen einer radial äußeren Kante und einer radial inneren Kante (8b) bewegt, wobei die radial innere Kante (8b) durch eine Druckoberfläche (10) definiert ist, die parallel zur Längsachse (A) angeordnet ist, mit der die Druckoberfläche (17) der jeweiligen radialen Schulter (16) in der zweiten Position des Dehnkorpus verbunden ist.

8. Verbindungseinrichtung nach einem der vorhergehenden Ansprüche, **dadurch gekennzeichnet, dass** die radialen Schultern (16) jeweils durch eine jeweilige scheibenförmige Schulter (18) definiert sind, die sich rund um die Längsachse erstreckt.

9. Verbindungseinrichtung nach Anspruch 3, **dadurch gekennzeichnet, dass** ein jedes dehnbare Segment (7) eine radial innere Oberfläche (9b) aufweist, die mit der Abfolge von radialen Vorsprüngen (8) versehen ist.

10. Verbindungseinrichtung nach einem der vorhergehenden Ansprüche, **dadurch gekennzeichnet, dass** der erste dehnbare Sektor (5) eine radial äußere Oberfläche (9a) aufweist, die mit einer Vielzahl von Greifzähnen (11) versehen ist, die ausgeformt sind, um den länglichen Korpus (2) mit der ersten Komponente des Möbelstücks zu verankern.

## Revendications

1. Dispositif de connexion entre les composants d'un meuble, incluant :
- un corps allongé (2) se prolongeant le long de son propre axe longitudinal (A) entre une première partie (3) pouvant être logée dans un premier siège obtenu dans un premier composant dudit meuble, et une deuxième partie (4), pouvant être logée dans un deuxième siège obtenu dans un deuxième composant dudit meuble ; ledit corps allongé (2) comprenant un premier (5) et un deuxième secteur extensible (6) associés, respectivement, à la première (3) et à la deuxième partie (4), et mobiles entre une condition radialement contractée et une condition radialement expansée ;
- des moyens d'actionnement (12) comprenant au moins un corps d'expansion (13) logé de manière coulissante dans ledit corps allongé (2) et pourvu d'au moins une première (14a) et une deuxième (14b) parties élargies associées, respectivement, au premier (5) et au deuxième (6) secteurs extensibles ; ledit corps d'expansion (13) étant sélectivement mobile entre une première position, dans laquelle il maintient le premier (5) et le deuxième secteur extensible (6) dans ladite condition radialement contractée, et une deuxième position, dans laquelle la première (14a) et la deuxième partie élargie (14b) amènent le premier (5) et le deuxième secteur extensible (6) dans ladite condition radialement expansée ;
dans lequel ladite première partie élargie (14a) du corps d'expansion (13) comprend de multiples épaulements radiaux (16) espacés le long de l'axe longitudinal (A) de manière à définir une séquence alternée d'apex et de rainures, dans lequel, dans ladite condition radialement expansée, chaque épaulement radial (16) se met en prise, par poussée radiale, avec le premier secteur extensible (5) de manière à réaliser une expansion prolongée du premier secteur se prolongeant au moins en correspondance desdits épaulements radiaux,
**caractérisé en ce que** ledit premier secteur extensible (5) comprend des segments multiples (7) extensibles entre eux qui sont espacés angulairement autour dudit axe longitudinal (A) et chacun d'eux se développant le long de l'axe longitudinal (A) entre deux parties d'extrémité (7a) chacune liée au corps allongé (2) de sorte qu'une partie centrale (7b) desdits segments s'étend entre lesdites parties d'extrémité (7a).

2. Dispositif de connexion selon la revendication 1, **caractérisé en ce que** les moyens d'actionnement (12) comprennent un élément actionneur (15) accessible à un opérateur et associé au corps d'expansion (13) pour le déplacer entre la première position et la deuxième position ; ledit élément actionneur (15) étant logé dans la première partie (3) du corps allongé (2).

3. Dispositif de connexion selon la revendication 1 ou 2, **caractérisé en ce que** le premier secteur extensible (5) comprend une surface radialement extérieure (9a) et une surface radialement intérieure (9b) associée de manière coulissante à la première partie élargie (14a) du corps d'expansion (13) et comportant une succession de saillies radiales (8) espacées le long de l'axe longitudinal (A) et positionnées de telle manière que :
- dans la première position du corps d'expansion (13) et en référence à l'axe longitudinal (A), les épaulements radiaux (16) du corps d'expansion (13) sont alternés avec les saillies radiales (8) du premier secteur extensible (5) ;
- dans la deuxième position du corps d'expansion (13) et en référence à l'axe longitudinal (A), chaque épaulement radial (16) du corps d'expansion (13) est situé en correspondance d'une saillie radiale (8) respective du premier secteur extensible (5) et relié à celui-ci par une poussée radiale pour étendre ledit premier secteur extensible (5).

4. Dispositif de connexion selon l'une quelconque des revendications précédentes, **caractérisé en ce que** lesdits épaulements radiaux (16) ont une conformation en forme de coin pourvue d'une surface de coulissement (17) inclinée par rapport à l'axe longitudinal (A) de telle manière qu'à une translation du corps d'expansion (13) le long dudit axe longitudinal (A) corresponde une action de poussée radiale de l'épaulement radial (16) sur le premier secteur extensible (5).

5. Dispositif de connexion selon la revendication 4, **caractérisé en ce que** la surface de coulissement (16a) de chaque épaulement radial (16) est associée de manière coulissante à une surface de coulissement (8a) correspondante de la saillie radiale relative (8) étant également inclinée par rapport à l'axe longitudinal (A) afin de faciliter le coulissement.

6. Dispositif de connexion selon l'une quelconque des revendications précédentes, **caractérisé en ce que** chacun desdits épaulements radiaux (16) se développe en s'éloignant dudit axe longitudinal (A) entre un bord radialement intérieur (16b) et un bord radialement extérieur (16c), dans lequel ledit bord radialement extérieur (16c) est défini par une surface de poussée (17) parallèle au dit axe longitudinal (A).

7. Dispositif de connexion selon l'une quelconque des revendications précédentes, **caractérisé en ce que** chacune desdites saillie radiales (8) se développe en se rapprochant dudit axe longitudinal (A) entre un bord radialement extérieur et un bord radialement intérieur (8b), dans lequel ledit bord radialement intérieur (8b) est défini par une surface de poussée (10) parallèle au dit axe longitudinal (A) à laquelle, dans ladite deuxième position du corps d'expansion, la surface de poussée (17) de l'épaulement radial (16) respectif est reliée.

8. Dispositif de connexion selon l'une quelconque des revendications précédentes, **caractérisé en ce que** lesdits épaulements radiaux (16) sont chacun définis par un épaulement (18) respectif en forme de disque se prolongeant autour de l'axe longitudinal.

9. Dispositif de connexion selon la revendication 3, **caractérisé en ce que** chaque segment extensible (7) comporte une surface radialement interne (9b) pourvue de ladite succession de saillies radiales (8).

10. Dispositif de connexion selon l'une quelconque des revendications précédentes, **caractérisé en ce que** le premier secteur expansible (5) comporte une surface radialement extérieure (9a) pourvue d'une pluralité de dents de préhension (11) formées pour ancrer le corps allongé (2) au premier composant dudit meuble.
